# EUROPÄISCHE PATENTSCHRIFT

(11) **EP 3 728 278 B1**
(45) Veröffentlichungstag und Bekanntmachung des Hinweises auf die Patenterteilung: **30.11.2022**
(21) Anmeldenummer: 18816066.7
(22) Anmeldetag: 14.12.2018
(51) Int. Cl.: C07F 9/30

(54) **VERFAHREN ZUR HERSTELLUNG VON PHOSPHORHALTIGEN AMINONITRILEN UND GLUFOSINAT**
METHOD FOR THE PREPARATION OF AMINONITRILES CONTAINING PHOSPHORUS AND GLUFOSINAT
PROCÉDÉ DE FABRICATION D'AMINONITRILES PHOSPHORÉS ET GLUFOSINAT

(30) Priorität: 19.12.2017 EP 17208492
(43) Veröffentlichungstag der Anmeldung: 28.10.2020
(73) Patentinhaber: BASF SE, 67056 Ludwigshafen am Rhein (DE)
(72) Erfinder: TELLMANN, Kilian, 51368 Leverkusen (DE); KARIG, Gunter, 65926 Frankfurt am Main (DE); EHRICH, Heike, 12526 Berlin (DE); SEBEK, Michael, 18055 Rostock (DE)
(74) Vertreter: BASF IP Association
(86) Internationale Anmeldenummer: PCT/EP2018/084875
(87) Internationale Veröffentlichungsnummer: WO 2019/121362

(56) Entgegenhaltungen:
- EP-A2- 0 382 114
- WO-A1-2017/037009
- WO-A1-2017/037012
- WO-A1-2017/037033
- WO-A1-2017/037034
- WO-A1-2019/015909
- CN-B- 105 218 579
- Anonymous: "Coefficient of Variation (CoV)", Statiflo Corporation , XP002782113, Gefunden im Internet: URL:https://www.statiflo.com/about-static- mixing/mixture-quality/coefficient-of-vari ation-cov/ [gefunden am 2018-05-18]

## Beschreibung

Die vorliegende Erfindung betrifft primär in einem kontinuierlich betriebenen Reaktor durchgeführte Verfahren zur Herstellung bestimmter phosphorhaltiger α-Aminonitrile der nachfolgend definierten Formeln (la) und (Ib) aus entsprechenden phosphorhaltigen Cyanhydrinestern und deren Verwendung zur Herstellung von Glufosinat bzw. von Glufosinat-Salzen. Ferner betrifft die vorliegende Erfindung ein Verfahren zur Herstellung von Glufosinat bzw. von Glufosinat-Salzen.

Phosphorhaltige Cyanhydrinester sind wertvolle Zwischenprodukte auf verschiedenen technischen Gebieten, insbesondere zur Herstellung biologisch aktiver Substanzen, die im pharmazeutischen bzw. agrochemischen Bereich eingesetzt werden können.

US 4,168,963 beschreibt die Herstellung diverser phosphorhaltiger und herbizid wirksamer Verbindungen, von denen insbesondere Phosphinothricin (2-Amino-4-[hydroxy(methyl)phosphinoyl]-butansäure; Kurzbezeichnung ("common name"): Glufosinate, nachfolgend Glufosinat) bzw. dessen Salze kommerzielle Bedeutung im Bereich der Agrochemie (Agrarchemie) erlangt haben.

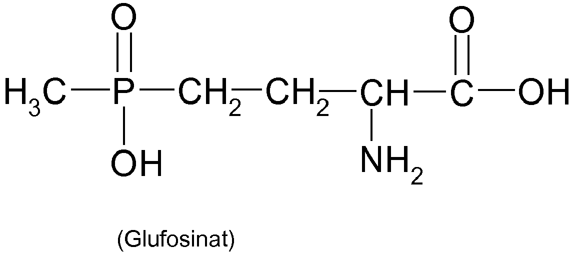

Methoden zur Herstellung von Zwischenprodukten zur Synthese solcher phosphorhaltiger und herbizid wirksamer Verbindungen, insbesondere von Glufosinat, sind beispielsweise in US 4,521,348, US 4,599,207 und US 6,359,162B1 beschrieben. Die Veröffentlichungen WO 2015/173146, WO 2017/037033, WO 2017/037034, WO 2017/037009 und WO 2017/037012 beschreiben weiter verbesserte Verfahrensvarianten zur Herstellung von phosphorhaltigen Cyanhydrinen bzw. Cyanhydrinestern.

CA1231103 (entsprechend EP 0 121 226) beschreibt ein Verfahren zur Herstellung von Phosphinothricin durch Behandlung von 4-(Hydroxymethyl-phosphinyl)-2-oxobuttersäure in Gegenwart eines Hydrierungskatalysators in einer Wasserstoffatmosphäre mit Ammoniak oder primären Aminen.

US 4,521,348 (entsprechend EP 0 011 245) beschreibt primär Verfahren zur Herstellung phosphorhaltiger Cyanhydrinderivate und, unter Hinweis auf Offenlegungsschrift DE 27 17 440 (entsprechend US 4,168,963), die schematische Umsetzung von iso-Butyl (3-cyano-3-hydroxypropyl)methylphosphinat mit Ammoniak und Wasser (ähnlich in WO 2015/173146).

US 4,692,541 offenbart Verfahren zur Herstellung von phosphorhaltigen α-Aminonitrilen durch Umsetzung von Acylalen mit Alkalimetalcyaniden unter Bedingungen der Strecker-Synthese unter Verwendung von Ammoniumchlorid (NH₄Cl) und konzentrierter wässriger Ammoniaklösung (etwa 25%ig). Dieses Dokument führt ferner aus, dass gemäß dem in US 4,521,348 (entsprechend EP 0 011 245) beschriebenen Verfahren nach der Umsetzung von iso-Butyl (3-cyano-3-acetoxypropyl)methylphosphinat mit 1.) NH₃, anschließend mit 2.) KOH und 3.) H₂SO₄ Glufosinat in einer Ausbeute von ca. 85% erhalten wird.

CN102399240A beschreibt ein verbessertes Verfahren zur Herstellung von Glufosinat-Ammonium, unter anderem auch die Umsetzung von Acroleincyanhydrinacetat mit Ethylmethylphosphinat in Gegenwart eines Radikalbildners und anschließender Aminolyse des erhaltenen Rohproduktes mit einer Mischung aus Ammoniumchlorid (NH₄Cl) und 25%igem wässrigem Ammoniak zum α-Aminonitril.

EP0382114 beschreibt ein Verfahren, bei dem D,L-(3-Acetoxy-3-cyano-propyl)methylphosphinsäurecyclohexylester mit Ammoniak umgesetzt wird, wobei intermediär D,L-(3-Amino-3-cyano-propyl)methylphopshinsäurecyclohexylester ensteht, welches anschließend mit Phenylessigsäurechlorid N-acyliert wird, sowie die Verwendung der Verbindung D,L-(3-Amino-3-cyano-propyl)methylphopshinsäurecyclohexylester zur Herstellung von Glufosinat.

CN105218579 offenbart die Umsetzung von 4-(Ethoxy(methyl)phosphinyl)-2-acetoxy butylcyanid zu Glufosinat-Ammonium.

Die Verfahren aus dem Stand der Technik zur Herstellung phosphorhaltiger α-Aminonitrile aus entsprechenden phosphorhaltigen Cyanhydrinestern erlauben zwar die Herstellung der gewünschten phosphorhaltigen α-Aminonitrile in teils sehr guter Ausbeute, weisen jedoch noch Nachteile in Bezug auf eine Anwendbarkeit im technischen Produktionsmaßstab auf, wie beispielsweise zu geringe Raum-Zeit-Ausbeuten, einen hohen stöchiometrischen Einsatz von Ausgangsstoffen wie Ammoniak, einen zu hohen Anteil an Koppel- oder Nebenprodukten (und die damit einhergehende Entsorgung, z.B. Abwasserbelastung) und einen zu hohen Aufwand bei der Reinigung bzw. Isolierung der phosphorhaltigen α-Aminonitrile (z.B. durch die unerwünscht hohe Salzfracht und der dadurch notwendige Filtrationsaufwand).

Aufgabe der vorliegenden Erfindung war es daher, ein Verfahren zur Herstellung phosphorhaltiger α-Aminonitrile aus entsprechenden phosphorhaltigen Cyanhydrinestern zu finden, welches die phosphorhaltigen α-Aminonitrile gegenüber den Verfahren des Stands der Technik in zumindest vergleichbarer oder besserer chemischer Ausbeute liefert und einen, mehrere oder sämtliche der vorstehend genannten Nachteile verbessert, insbesondere eine verbesserte Raum-Zeit-Ausbeute erlaubt, einen verringerten Einsatz von Ausgangsstoffen wie Ammoniak, einen geringeren Anteil an Koppel- oder Nebenprodukten, und dabei vorzugsweise eine verbesserte Reaktionsführung ermöglicht, beispielsweise in Bezug auf wirtschaftliche, umweit- und/oder qualitätsrelevante Aspekte.

Das nachfolgend beschriebene erfindungsgemäße Verfahren erfüllt diese Aufgabe.

Gegenstand der vorliegenden Erfindung ist ein kontinuierliches Verfahren zur Herstellung einer Mischung enthaltend mindestens eine Verbindung der Formel (Ia) und mindestens eine Verbindung der Formel (Ib) 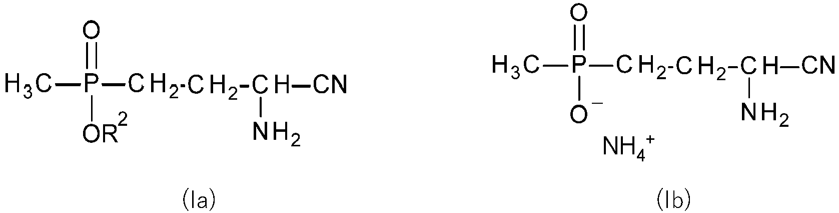
dadurch gekennzeichnet, dass eine oder mehrere Verbindungen der Formel (II) 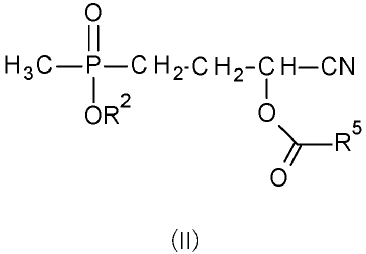
wobei jeweils gilt:
   R² bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
   R⁵ bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
   in einem kontinuierlich betriebenen Rohrreaktor, dessen Länge mehr als das 100fache der charakteristischen Länge beträgt, unter Mischen mit NH₃ in flüssiger oder überkritischer Form umgesetzt werden, wobei als charakteristische Länge bei runder Reaktor-Querschnittsfläche der Durchmesser, bei quadratischer Reaktor-Querschnittsfläche die Seitenlänge des Quadrats, bei einer rechteckigen Reaktor-Querschnittsfläche das geometrische Mittel aus Länge (a) und Breite (b) des rechteckigen Querschnitts bezeichnet wird; und wobei das Mischen der Verbindung(en) der Formel (II) und NH₃ unter den folgenden Parametern erfolgt:
      die Mischzeit zum Erreichen eines Variationskoeffizienten von 0,10 oder geringer (CoV ≤ 10⁻¹) beträgt weniger als 30 Sekunden.

Mit den erfindungsgemäßen Verfahren, insbesondere in einer der als bevorzugt bzw. als besonders bevorzugt bezeichneten Ausgestaltungen der erfindungsgemäßen Verfahren, werden die Mischungen enthaltend die phosphorhaltigen α-Aminonitrile der Formeln (Ia) und (Ib) mit einer verbesserten Raum-Zeit-Ausbeute, einem verringerten Einsatz von Ausgangsstoffen wie Ammoniak, einer verbesserten Verfahrensökonomie (z.B. verbesserte Aufarbeitung der Reaktion durch verringerten Filtrationsaufwand), einem geringeren Anteil an Koppel- oder Nebenprodukten, und somit unter verbesserter Reaktionsführung, hergestellt.

Insgesamt entstehen in den erfindungsgemäßen Verfahren, auch in dem weiteren nachfolgend beschriebenen erfindungsgemäßen Verfahren zur Herstellung von Glufosinat, bei verringertem Einsatz von Ausgangsstoffen weniger unerwünschte Neben- und Koppelkomponenten, so dass die erfindungsgemäßen Verfahren effizienter, energiesparender und umweltschonender sind.

Der Variationskoeffizient CoV (engl. coefficient of variation) charakterisiert die Verteilung der einzelnen Komponenten in einer Mischung anhand von Konzentrationsdifferenzen. Ein Variationskoeffizient (CoV) von 0 steht für eine ideale, vollkommen homogene Mischung, hingegen ein Variationskoeffizient (CoV) von 1 für keine Durchmischung.

Der Mischungskoeffizient stellt den Gegenpart zum Variationskoeffizienten dar: Ein Mischungskoeffizient von 1 steht für eine ideale, vollkommen homogene Mischung, hingegen ein Mischungskoeffizient von 0 für keine Durchmischung (vgl. z.B. "Chemietechnik" von Eckhard Ignatowitz, 8. Auflage (2007), Seite 314).

Im Falle der Umsetzung von 3-[n-Butoxy(methyl)phosphoryl]-1-cyano-1-propylacetat (ACM), eine Verbindung der Formel (II), und Ammoniak ermöglicht eine kontinuierliche Prozessführung im Vergleich zu einer diskontinuierlichen Prozessführung (dosierkontrollierte Zugabe von NH₃, semi-batch) überraschenderweise eine Steigerung der in-situ Ausbeute von Glufosinate-Ammonium, bezogen auf das eingesetzte ACM, von ca. 93% auf ca. 97%, was etwa einer Halbierung der Nebenkomponenten entspricht. Diese überraschende Verbesserung ist vermutlich auf kürzere Kontaktzeiten und eine vorteilhaftere Verweilzeitverteilung sowie vorzugsweise etwas höhere Reaktionstemperaturen zurückzuführen.

Das erfindungsgemäße Verfahren wird daher in kontinuierlicher Prozessführung, d.h. in einem kontinuierlich betriebenen Reaktor durchgeführt.

Unter einer kontinuierlichen Prozessführung im Sinne der vorliegenden Erfindung ist zu verstehen, dass Verbindungen (d.h. Edukte wie Verbindungen der Formel (II) und Ammoniak) in den Reaktor eingebracht werden (Eintrag / Zulauf) und gleichzeitig, aber davon räumlich getrennt, Verbindungen (d.h. Produkte wie Verbindungen der Formel (la) und (Ib)) aus dem Reaktor ausgebracht werden (Austrag / Ablauf).

Bei einer diskontinuierlichen Prozessführung hingegen erfolgen die Schritte Eintrag von Edukten (d.h. von Verbindungen der Formel (II) und Ammoniak), Umsetzung (d.h. Reaktion der Edukte) und Austrag der Produkte (d.h. Produkte wie Verbindungen der Formel (la) und (Ib)) aus dem Reaktor zeitlich nacheinander oder nur in einzelnen Abschnitten überlappend. Hierunter fällt auch die Semi-Batch- Prozessführung (dosierkontrollierte Fahrweise), wobei der Eintrag von NH₃ in vorgelegtes ACM im Wesentlichen bei gleichzeitig ablaufender Reaktion unter Bildung von Mischungen enthaltend Verbindungen der Formeln (la) und (Ib) erfolgt.

Das Mischen im Zusammenhang mit einem erfindungsgemäßen Verfahren kann gemäß dem Fachmann bekannten Methoden erfolgen, vorzugsweise durch Rühren, Umpumpen oder Pumpen durch statische Mischer (SMX-Mischer von der Firma Sulzer, Kaskadenmischer von der Firma Ehrfeld Mikrotechnik etc.), wobei jeweils zusätzlich Stromstörer verwendet werden können.

Bevorzugt wird ein erfindungsgemäßes Verfahren in einem Rohrreaktor durchgeführt, optional mit Stromstörern oder statischen Mischeinlagen wie z.B. im Falle des in eigenen Versuchen eingesetzten MIPROWA-Reaktors der Firma Ehrfeld Mikrotechnik BTS GmbH eine dreifache Kammschicht pro Kanal. Der kontinuierlich betriebene Rohrreaktor vermeidet, z.B. im Gegensatz zum kontinuierlich betriebenen Rührreaktor, die Rückvermischung und ist daher bevorzugt zu verwenden. Zum Erreichen erforderlicher Mischparameter vom Beginn des Eintrags der Edukte an ist es beispielsweise im Labormaßstab zweckmäßig, dem Rohrreaktor einen Mikromischer vorzuschalten.

Ein ideales Strömungsrohr (engl.: Plug-flow-reactor (PFR)) ist ein idealisierter, rohrförmiger Reaktor, bei dem eine sogenannte Pfropfenströmung vorliegt. Die Annahme dabei ist, dass in der Pfropfenströmung die Reaktionsmasse perfekt in radialer Richtung gemischt ist, jedoch keine Vermischung in axialer Richtung erfolgt. Man kann sich diese Strömung als eine Reihe von unendlich dünnen Scheibchen (Pfropfen) der Reaktionsmasse vorstellen, die in axialer Richtung durch das Rohr "wandert". Diese Scheibchen haben keinen Stoff- oder Wärmeaustausch untereinander, so dass jedes Scheibchen eine andere Zusammensetzung aufweist als die jeweils benachbarten Scheibchen. Innerhalb jedes Scheibchens ist die Zusammensetzung einheitlich, d.h. alle Konzentrationen und die Temperatur sind gleich. Die Stoffumwandlungen finden entlang des Fließweges statt, die Konzentrationen der Stoffe ändern sich entsprechend entlang des Rohres.

Unter einem "Rohrreaktor" wird im Rahmen der vorliegenden Erfindung ein Reaktor verstanden, bei dem die Länge des durchströmten Reaktors mehr als das 100fache der charakteristischen Länge beträgt.

Unter der charakteristischen Länge (l_char) wird bei runder Reaktor-Querschnittsfläche der Durchmesser und bei quadratischer Reaktor-Querschnittsfläche die Seitenlänge des Quadrats bezeichnet.

Im Falle einer rechteckigen Reaktor-Querschnittsfläche ist die charakteristische Länge (l_char) das geometrische Mittel aus Länge (a) und Breite (b) des rechteckigen Querschnitts (d.h. l_char = die Quadratwurzel aus dem Produkt von a*b).

Als Reaktor-Querschnittsfläche wird dabei jeweils die Fläche orthogonal zur Strömungsrichtung bezeichnet.

Im Rahmen der vorliegenden Erfindung ist der kontinuierlich betriebene Reaktor ein Rohrreaktor, dessen Länge mehr als das 300fache der charakteristischen Länge beträgt, bevorzugt mehr als das 1000fache der charakteristischen Länge, weiter bevorzugt mehr als das 3000fache der charakteristischen Länge und besonders bevorzugt mehr als das 10000fache der charakteristischen Länge.

Mikroreaktoren bieten diverse Vorteile gegenüber konventionellen Reaktoren. Sie zeichnen sich durch ein hohes Oberfläche-zu-Volumen-Verhältnis aus, woraus hohe spezifische Stoff- und Wärmetauschleistungen resultieren. Sie gestatten eine sehr genau einstellbare, kontinuierliche Prozessführung, kurze Verweilzeit der Reaktanden sowie der Produkte, bessere Kontrolle schnell ablaufender Reaktionen und rasche Weiterverarbeitung von kurzlebigen bzw. instabilen Zwischenprodukten.

Das Reaktorvolumen beträgt vorzugsweise mindestens 1 Liter, bevorzugt mindestens 2 Liter, weiter bevorzugt mindestens 5 Liter, und noch weiter bevorzugt mindestens 10 Liter. Dabei beträgt das Reaktorvolumen vorzugsweise höchstens 50 m³, bevorzugt höchstens 15 m³, weiter bevorzugt höchstens 5 m³.

Kürzere Kontaktzeiten sind von Vorteil, da die phosphorhaltigen α-Aminonitrile der Formeln (la) und (Ib) weder sicherheitstechnisch noch qualitätstechnisch stabile Substanzen darstellen. Die geringere Rückvermischung in der kontinuierlichen Prozessführung, vorzugsweise in einem Rohrreaktor, mindert ungünstige und unerwünschte Nebenreaktionen. Höhere Reaktionstemperaturen favorisieren außerdem eine geringere Bildung des intermediär entstehenden Cyanhydrins, bewirken zugleich auch eine Schwächung der unerwünschten Hydrolyse des Phosphinsäureesters. Letztere Auswirkung eröffnet zudem das Potenzial, mit geringeren NH₃-Überschüssen zu arbeiten, was neben einem geringeren Verbrauch des Rohstoffs Ammoniak (NH₃) zu einer Reduzierung des als Koppelprodukt in der Herstellung von Glufosinat anfallenden Ammoniumchlorids (NH₄Cl) führt. Des Weiteren sind bei kontinuierlicher Prozessführung die mit höheren Reaktionstemperaturen einerseits einhergehenden potenziellen Gefährdungen, andererseits die damit verbundenen höheren Wärmefreisetzungsraten im (groß)technischen Maßstab leichter zu beherrschen, als bei entsprechender diskontinuierlicher Prozessführung.

Vorzugsweise gilt für ein erfindungsgemäßes Verfahren, dass das Mischen unter den folgenden Parametern erfolgt:
die Mischzeit zum Erreichen eines Variationskoeffizienten von 0,05 oder geringer (CoV ≤ 5*10⁻²) beträgt weniger als 15 Sekunden.

Bevorzugt gilt für ein erfindungsgemäßes Verfahren, dass das Mischen unter den folgenden Parametern erfolgt:
die Mischzeit zum Erreichen eines Variationskoeffizienten von 0,05 oder geringer (CoV ≤ 5*10⁻²) beträgt weniger als 4 Sekunden.

Weiter bevorzugt gilt für ein erfindungsgemäßes Verfahren, dass das Mischen unter den folgenden Parametern erfolgt:
die Mischzeit zum Erreichen eines Variationskoeffizienten von 0,05 oder geringer (CoV ≤ 5*10⁻²) beträgt weniger als 1 Sekunde.

Die mittlere hydrodynamische Verweilzeit im Reaktor liegt bei einem erfindungsgemäßen Verfahren vorzugsweise im Bereich von 1 Minute bis 8 Stunden. Je nach Reaktortyp und Reaktorkonfiguration liegt die mittlere hydrodynamische Verweilzeit im Reaktor bevorzugt im Bereich von 3 bis 180 Minuten, besonders bevorzugt im Bereich von 6 bis 90 Minuten, und am meisten bevorzugt im Bereich von 10 bis 60 Minuten.

Ein erfindungsgemäßes Verfahren ist insbesondere auch für die Durchführung im technischen bzw. industriellen Maßstab geeignet.

Die jeweiligen Alkylreste der Reste R² und R⁵ können im Kohlenstoffgerüst jeweils geradkettig oder verzweigtkettig (verzweigt) sein.

Der Ausdruck "(C₁-C₄)-Alkyl" ist dabei die Kurzschreibweise für einen Alkylrest mit 1 bis 4 Kohlenstoffatomen, d.h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z.B. "(C₁-C₆)-Alkyl" umfassen entsprechend auch gradkettige oder verzweigte Alkylreste mit einer größeren Zahl von C-Atomen, d.h. gemäß Beispiel auch die Alkylreste mit 5 und 6 C-Atomen.

Der Ausdruck "(C₄-C₅)-Alkyl" ist dabei die Kurzschreibweise für einen Alkylrest mit 4 oder 5 Kohlenstoffatomen, d.h. umfasst die Reste n-Butyl, iso-Butyl, sec-Butyl, tert-Butyl, n-Pentyl, iso-Pentyl, sec-Pentyl, bzw. neo-Pentyl.

"Halogen" bezieht vorzugsweise auf die Gruppe bestehend aus Fluor, Chlor, Brom und lod. Haloalkyl, Haloaryl, Haloaralkyl und Halocycloalkyl bedeuten durch gleiche oder verschiedene Halogenatome, vorzugsweise aus der Gruppe Fluor, Chlor und Brom, insbesondere aus der Gruppe Fluor und Chlor, teilweise oder vollständig substituiertes Alkyl, Aryl, Aralkyl bzw. Cycloalkyl. So umfasst Haloalkyl z.B. Monohaloalkyl (= Monohalogenalkyl), Dihaloalkyl (= Dihalogenalkyl), Trihaloalkyl (= Trihalogenalkyl), oder auch Perhaloalkyl, wie beispielsweise CF₃, CHF₂, CH₂F, CF₃CF₂, CH₂FCHCl, CCl₃, CHCl₂, CH₂CH₂Cl. Entsprechendes gilt für die anderen durch Halogen substituierte Reste.

Die Herstellung der phosphorhaltigen Cyanhydrinester der Formel (II) ist dem Fachmann bekannt und kann nach literaturbekannten Verfahren erfolgen (z.B. gemäß den eingangs genannten Dokumenten).

Für die Formeln (la) und (II) im Zusammenhang mit den erfindungsgemäßen Verfahren gilt vorzugsweise
- R²: bedeutet (C₃-C₆)-Alkyl, und
- R⁵: bedeutet (C₁-C₄)-Alkyl, (C₆-C₈)-Aryl oder (C₅-C₈)-Cycloalkyl.

Für die Formeln (la) und (II) im Zusammenhang mit den erfindungsgemäßen Verfahren gilt bevorzugt
- R²: bedeutet (C₄-C₅)-Alkyl, und
- R⁵: bedeutet Methyl, Ethyl oder iso-Propyl.

Für die Formeln (la) und (II) im Zusammenhang mit dem erfindungsgemäßen Verfahren gilt besonders bevorzugt
- R²: bedeutet n-Butyl, iso-Butyl, n-Pentyl oder iso-Pentyl, und
- R⁵: bedeutet Methyl.

Für die Formeln (la) und (II) im Zusammenhang mit dem erfindungsgemäßen Verfahren gilt besonders bevorzugt
- R²: bedeutet n-Butyl, und
- R⁵: bedeutet Methyl.

Das erfindungsgemäße Verfahren wird vorzugsweise in der Weise durchgeführt, dass insgesamt 2,0 bis 3,6 molare Äquivalente an NH₃ eingesetzt werden, bezogen auf die eingesetzte Menge an Verbindungen der Formel (II).

Das erfindungsgemäße Verfahren wird bevorzugt in der Weise durchgeführt, dass insgesamt 2,2 bis 3,2 molare Äquivalente an NH₃ eingesetzt werden, bezogen auf die eingesetzte Menge an Verbindungen der Formel (II).

Das erfindungsgemäße Verfahren wird besonders bevorzugt in der Weise durchgeführt, dass insgesamt 2,4 bis 2,8 molare Äquivalente an NH₃ eingesetzt werden, bezogen auf die eingesetzte Menge an Verbindungen der Formel (II).

Das erfindungsgemäße Verfahren wird vorzugsweise in der Weise durchgeführt, dass das eingesetzte NH₃ im Wesentlichen wasserfrei ist, da dabei die eingangs genannten Vorteile der erfindungsgemäßen Verfahren, insbesondere in Bezug auf eine verbesserte Raum-Zeit-Ausbeute, einen verringerten Einsatz von Ausgangsstoffen wie Ammoniak, einen geringeren Anteil an Koppel- oder Nebenprodukten, und eine verbesserte Reaktionsführung, in besonderem Maße erzielt werden können.

Im Zusammenhang mit den erfindungsgemäßen Verfahren ist das eingesetzte NH₃ vorzugsweise im Wesentlichen wasserfrei, d.h. dass der Wassergehalt im eingesetzten NH₃ bei maximal 0,5 Gew.-% liegt, regelmäßig bei maximal 0,25 Gew.-%, und häufig bei maximal 0,1 Gew.-%.

Das erfindungsgemäße Verfahren wird vorzugsweise in der Weise durchgeführt, dass die Umsetzung ohne Zugabe von Ammoniumchlorid (NH₄Cl) und/oder ohne Zugabe von Wasser erfolgt.

In eigenen Versuchen hat sich gezeigt, dass Zugabe von Ammoniumchlorid (NH₄Cl) keine vorteilhaften Auswirkungen auf das erfindungsgemäße Verfahren hat und insoweit entbehrlich ist. Da die weitere Herstellung von Glufosinat und seinen Salzen nach den literaturbekannten Verfahren in der Regel einen Filtrationsschritt zur Abtrennung von im Reaktionsverlauf gebildeten, salzförmigen Neben- oder Kopplungsprodukten beinhaltet, bedeutet ein Verzicht auf den Zusatz von Ammoniumchlorid in erfindungsgemäßen Verfahren eine weiter verbesserte Reaktionsführung, besonders hinsichtlich einer späteren Filtration.

Das erfindungsgemäße Verfahren wird vorzugsweise in der Weise durchgeführt, dass eine oder mehrere Verbindungen der Formel (II) wie vorstehend definiert, vorzugsweise eine oder mehrere der als bevorzugt bzw. besonders bevorzugt definierten Verbindungen der Formel (II), und NH₃ jeweils in flüssiger Form in dem Reaktor vermischt werden.

Das erfindungsgemäße Verfahren wird vorzugsweise in der Weise durchgeführt, dass die Umsetzung bei einer Temperatur im Bereich von 10 bis 80 °C erfolgt, bevorzugt bei einer Temperatur im Bereich von 15 bis 75 °C.

Das erfindungsgemäße Verfahren wird bevorzugt in der Weise durchgeführt, dass die Umsetzung bei einer Temperatur im Bereich von 20 bis 70 °C erfolgt, besonders bevorzugt bei einer Temperatur im Bereich von 25 bis 65 °C.

Die erfindungsgemäß gebildeten Mischungen enthaltend die phosphorhaltigen α-Aminonitrile der Formeln (la) und (Ib) können als Ausgangsstoffe zur Synthese von phosphorhaltigen Aminosäuren wie beispielsweise Glufosinat verwendet werden (ein solcher Syntheseweg wird weiter unten näher beschrieben).

Es ist ferner möglich, das erfindungsgemäße Verfahren unter Überdruck oder unter vermindertem Druck durchzuführen, wobei erfindungsgemäße Verfahren unter Überdruck bevorzugt sind, insbesondere da das NH₃ bevorzugt in flüssiger (oder gegebenenfalls in überkritischer) Form eingesetzt wird.

Das erfindungsgemäße Verfahren wird vorzugsweise in der Weise geführt, dass die Umsetzung bei einem absoluten Druck (pabs) von maximal 120 bar erfolgt, bevorzugt bei einem absoluten Druck von maximal 80 bar, weiter bevorzugt bei einem absoluten Druck von maximal 40 bar. Dieser Druck hängt dabei insbesondere von der jeweils gewählten Reaktionstemperatur ab.

Je nach Wahl der Reaktionsparameter (insbesondere molares Mengenverhältnis von Verbindungen der Formel (II) und NH₃, die in der Umsetzung vorhandene und freigesetzte Menge an Wasser sowie damit zusammenhängend die Reaktionstemperatur und Reaktionsdauer) enthält die erfindungsgemäß hergestellte Mischung unterschiedliche Anteile an Verbindungen der Formel (la) und der Formel (Ib). Regelmäßig liegt der Anteil der Verbindung (la) bei 10 bis 90 mol.- %, zumeist liegt der Anteil der Verbindung (la) bei 20 bis 80 mol.-%, jeweils bezogen auf die Gesamtmenge an Verbindungen der Formel (la) und der Formel (Ib).

Unter den vorliegend bevorzugten bzw. besonders bevorzugten Reaktionsbedingungen beträgt der Anteil der Verbindung (la) regelmäßig 30 bis 80 mol.-%, häufig liegt der Anteil der Verbindung (la) bei 40 bis 80 mol.-%, und zumeist liegt der Anteil der Verbindung (la) bei 50 bis 80 mol.-%, jeweils bezogen auf die Gesamtmenge an Verbindungen der Formel (la) und (Ib).

Je nach Reaktionsdurchführung, insbesondere Reaktionsdauer und eingesetzte Menge an NH₃, kann der Anteil der Verbindung (la) bei 60 mol.-% oder mehr, bzw. auch 70 mol.-% oder mehr liegen, jeweils bezogen auf die Gesamtmenge an Verbindungen der Formel (la) und (Ib).

Das erfindungsgemäße Verfahren zur Herstellung der Mischungen enthaltend die phosphorhaltigen α-Aminonitrile der Formeln (la) und (Ib) gilt bevorzugt für die Formeln (la) und (II), in denen
- R²: (C₄-C₅)-Alkyl bedeutet, und
- R⁵: Methyl, Ethyl oder iso-Propyl bedeutet,
wobei
insgesamt 2,0 bis 3,6 molare Äquivalente an NH₃ eingesetzt werden, bezogen auf die eingesetzte Menge an Verbindungen der Formel (II), der kontinuierlich betriebene Reaktor ein Rohrreaktor ist, dessen Länge mehr als das 100fache der charakteristischen Länge beträgt, die Umsetzung bei einer Temperatur im Bereich von 10 bis 80 °C erfolgt, bevorzugt bei einer Temperatur im Bereich von 15 bis 75 °C, wobei vorzugsweise zusätzlich einer, mehrere oder sämtliche der folgenden Parameter gelten: die Umsetzung erfolgt ohne Zugabe von Ammoniumchlorid (NH₄Cl), die Umsetzung erfolgt ohne Zugabe von Wasser, das eingesetzte NH₃ ist im Wesentlichen wasserfrei, und/oder die Umsetzung erfolgt bei einem absoluten Druck (pabs) von maximal 120 bar.

Das erfindungsgemäße Verfahren zur Herstellung der Mischungen enthaltend die phosphorhaltigen α-Aminonitrile der Formeln (la) und (Ib) gilt bevorzugt für die Formeln (la) und (II), in denen
- R²: (C₄-C₅)-Alkyl bedeutet, und
- R⁵: Methyl, Ethyl oder iso-Propyl bedeutet,
wobei
insgesamt 2,2 bis 3,2 molare Äquivalente an NH₃ eingesetzt werden, bezogen auf die eingesetzte Menge an Verbindungen der Formel (II), der kontinuierlich betriebene Reaktor ein Rohrreaktor ist, dessen Länge mehr als das 100fache der charakteristischen Länge beträgt, die Umsetzung bei einer Temperatur im Bereich von 15 bis 75 °C erfolgt, die Umsetzung ohne Zugabe von Ammoniumchlorid (NH₄Cl) erfolgt, die Umsetzung ohne Zugabe von Wasser erfolgt, das eingesetzte NH₃ im Wesentlichen wasserfrei ist, und die Umsetzung bei einem absoluten Druck (pabs) von maximal 120 bar erfolgt.

Das erfindungsgemäße Verfahren zur Herstellung der Mischungen enthaltend die phosphorhaltigen α-Aminonitrile der Formeln (la) und (Ib) gilt besonders bevorzugt für die Formeln (la) und (II), in denen
- R²: n-Butyl, iso-Butyl, n-Pentyl oder iso-Pentyl (dabei wiederum bevorzugt n-Butyl) bedeutet, und
- R⁵: Methyl bedeutet,
wobei insgesamt 2,2 bis 3,2 molare Äquivalente an NH₃ eingesetzt werden, bezogen auf die eingesetzte Menge an Verbindungen der Formel (II). der kontinuierlich betriebene Reaktor ein Rohrreaktor ist, dessen Länge mehr als das 300fache der charakteristischen Länge beträgt, die Umsetzung bei einer Temperatur im Bereich von 20 bis 70 °C erfolgt, besonders bevorzugt bei einer Temperatur im Bereich von 25 bis 65 °C, wobei vorzugsweise zusätzlich einer, mehrere oder sämtliche der folgenden Parameter gelten:
die Umsetzung erfolgt ohne Zugabe von Ammoniumchlorid (NH₄Cl),
die Umsetzung erfolgt ohne Zugabe von Wasser,
das eingesetzte NH₃ ist im Wesentlichen wasserfrei, und/oder die Umsetzung erfolgt bei einem absoluten Druck (pabs) von maximal 80 bar.

Das erfindungsgemäße Verfahren zur Herstellung der Mischungen enthaltend die phosphorhaltigen α-Aminonitrile der Formeln (la) und (Ib) gilt besonders bevorzugt für die Formeln (la) und (II), in denen
- R²: n-Butyl, iso-Butyl, n-Pentyl oder iso-Pentyl (dabei wiederum bevorzugt n-Butyl) bedeutet, und
- R⁵: Methyl bedeutet,
wobei
insgesamt 2,2 bis 3,2 molare Äquivalente an NH₃ eingesetzt werden, bezogen auf die eingesetzte Menge an Verbindungen der Formel (II), der kontinuierlich betriebene Reaktor ein Rohrreaktor ist, dessen Länge mehr als das 1000fache der charakteristischen Länge beträgt, die Umsetzung bei einer Temperatur im Bereich von 25 bis 65 °C erfolgt, die Umsetzung ohne Zugabe von Ammoniumchlorid (NH₄Cl) erfolgt, die Umsetzung ohne Zugabe von Wasser erfolgt, das eingesetzte NH₃ im Wesentlichen wasserfrei ist, und die Umsetzung bei einem absoluten Druck (pabs) von maximal 40 bar erfolgt.

Das erfindungsgemäße Verfahren zur Herstellung der Mischungen enthaltend die phosphorhaltigen α-Aminonitrile der Formeln (la) und (Ib) gilt ganz besonders bevorzugt für die Formeln (la) und (II), in denen
- R²: n-Butyl, iso-Butyl, n-Pentyl oder iso-Pentyl (dabei wiederum bevorzugt n-Butyl) bedeutet, und
- R⁵: Methyl bedeutet,
wobei
insgesamt 2,4 bis 2,8 molare Äquivalente an NH₃ eingesetzt werden, bezogen auf die eingesetzte Menge an Verbindungen der Formel (II), der kontinuierlich betriebene Reaktor ein Rohrreaktor ist, dessen Länge mehr als das 3000fache der charakteristischen Länge beträgt, die Umsetzung bei einer Temperatur im Bereich von 25 bis 65 °C erfolgt, die Umsetzung ohne Zugabe von Ammoniumchlorid (NH₄Cl) erfolgt, die Umsetzung ohne Zugabe von Wasser erfolgt, das eingesetzte NH₃ im Wesentlichen wasserfrei ist, und die Umsetzung bei einem absoluten Druck (pabs) im Bereich von maximal 40 bar erfolgt. Das erfindungsgemäße Verfahren kann in einem optionalen Verdünnungsmittel durchgeführt werden.

Als optionale Verdünnungsmittel sind grundsätzlich Wasser oder verschiedene organische und/oder anorganische Lösemittel einsetzbar. Bevorzugt wird das erfindungsgemäße Verfahren ohne Verwendung bzw. Zugabe solcher Verdünnungsmittel durchgeführt, auch, aber nicht nur, im Hinblick auf die Raum-Zeit-Ausbeute (wie oben bereits erwähnt).

Die nachfolgende schematische Darstellung in Schema 1 veranschaulicht die Umsetzung von Verbindungen der Formel (II) zu Verbindungen der Formeln (la) und (Ib), wobei R² und R⁵ die jeweils vorstehend genannte Bedeutung haben, und die Koppelprodukte (Wasser und Amid R⁵CONH₂) sowie die Nebenkomponenten (hauptsächlich Alkohol R²OH und Ester R⁵COOR²).

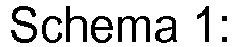

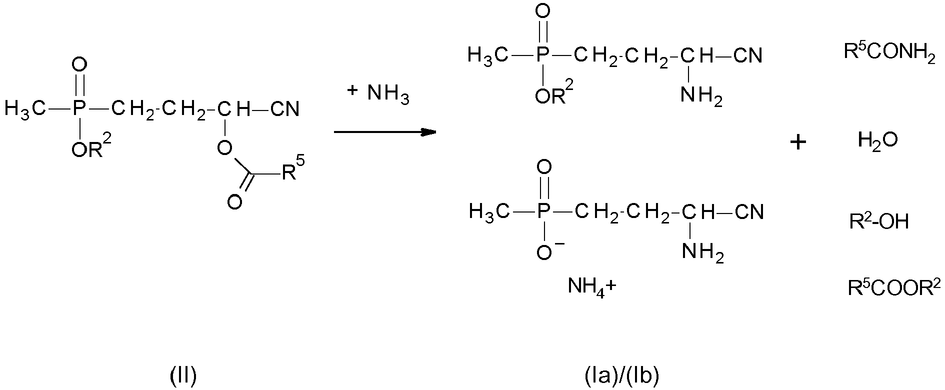

Bei Glufosinat-Salzen im Rahmen der vorliegenden Erfindung handelt es sich vorzugsweise um Ammonium-Salze, Phosphonium-Salze, Sulfonium-Salze, Alkali-Salze und Erdalkali-Salze von Glufosinat sowie Salze von Glufosinat mit Halogenwasserstoffsäuren oder Oxosäuren wie beispielsweise Schwefelsäure.

Insbesondere bevorzugt im Rahmen der vorliegenden Erfindung sind Glufosinat, Glufosinat-Natrium bzw. Glufosinat-Ammonium sowie Glufosinat-Hydrochlorid.

In einem weiteren Aspekt betrifft die vorliegende Erfindung die Herstellung von Glufosinat 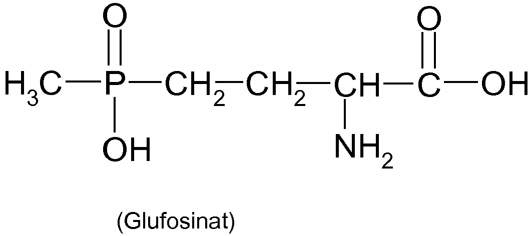
oder Glufosinat-Salzen, dadurch gekennzeichnet, dass in diesem Verfahren eine Mischung enthaltend mindestens eine Verbindung der Formel (la) und mindestens eine Verbindung der Formel (Ib) eingesetzt wird 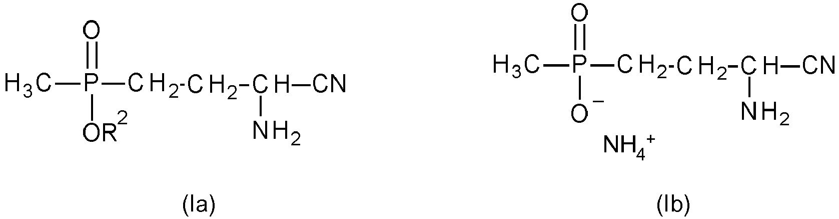
wobei R² die vorstehend erfindungsgemäß definierte Bedeutung hat, bevorzugt die vorstehend als bevorzugt definierte Bedeutung, und besonders bevorzugt die vorstehend als besonders bevorzugt definierte Bedeutung, und
die Herstellung dieser eingesetzten Mischung gemäß der erfindungsgemäßen Verfahren erfolgt, dabei vorzugsweise gemäß einer der vorstehend als bevorzugt bzw. besonders bevorzugt bezeichneten Ausgestaltungen.

Ferner betrifft die vorliegende Erfindung ein Verfahren zur Herstellung von Glufosinat bzw. von Glufosinat-Salzen, insbesondere von Glufosinat, Glufosinat-Natrium, Glufosinat-Hydrochlorid oder Glufosinat-Ammonium, umfassend die folgenden Schritte (a) und (b):
(a) Herstellung einer Mischung enthaltend mindestens eine Verbindung der Formel (la) und mindestens eine Verbindung der Formel (Ib), wie vorstehend erfindungsgemäß definiert, bevorzugt wie vorstehend als bevorzugt definiert, und besonders bevorzugt wie vorstehend als besonders bevorzugt definiert, wobei die Herstellung dieser Mischung gemäß der erfindungsgemäßen Verfahren erfolgt, dabei vorzugsweise gemäß einer der vorstehend als bevorzugt bzw. als besonders bevorzugt bezeichneten Ausgestaltungen,
   und
(b) Umsetzung der in Schritt (a) hergestellten Mischung enthaltend mindestens eine Verbindung der Formel (la) und mindestens eine Verbindung der Formel (Ib) zu Glufosinat bzw. zu Glufosinat-Salzen, insbesondere zu Glufosinat, Glufosinat-Natrium, Glufosinat-Hydrochlorid oder Glufosinat-Ammonium,
   oder
(b) Verwendung der in Schritt (a) hergestellten Mischung enthaltend mindestens eine Verbindung der Formel (la) und mindestens eine Verbindung der Formel (Ib) zur Herstellung von Glufosinat bzw. von Glufosinat-Salzen, insbesondere von Glufosinat, Glufosinat-Natrium, Glufosinat-Hydrochlorid oder Glufosinat-Ammonium.

Das erfindungsgemäße Verfahren, bevorzugt in einer der als bevorzugt bzw. als besonders bevorzugt bezeichneten Ausgestaltungen, zur Herstellung von Glufosinat bzw. von Glufosinat-Salzen wird dabei vorzugsweise in der Weise geführt, dass in Schritt (b) eine saure Verseifung der Nitrilgruppe und der Phosphinsäureestergruppe in Verbindungen der Formel (la) und eine saure Verseifung der Nitrilgruppe in Verbindungen der Formel (Ib) erfolgt, wobei diese Verseifungen vorzugsweise mit einer Mineralsäure erfolgen, dabei wiederum bevorzugt mit wässriger Chlorwasserstoffsäure (Salzsäure).

Dieser letztgenannte Verfahrensschritt des erfindungsgemäßen Verfahrens zur Herstellung von Glufosinat und/oder Glufosinat-Salzen kann in bekannter Weise erfolgen, wie beispielsweise in CN102399240A beschrieben.

Schließlich betrifft die vorliegende Erfindung auch die Verwendung einer gemäß einem erfindungsgemäßen Verfahren (bevorzugt in einer der als bevorzugt bzw. als besonders bevorzugt bezeichneten Ausgestaltungen) hergestellten Mischung, enthaltend jeweils mindestens eine Verbindung der Formel (la) und (Ib), wie vorstehend definiert, zur Herstellung von Glufosinat bzw. von Glufosinat-Salzen, insbesondere von Glufosinat, Glufosinat-Natrium, Glufosinat-Hydrochlorid oder Glufosinat-Ammonium.

Die nachfolgenden Beispiele veranschaulichen die vorliegende Erfindung.

### Beispiele:

Es wurden im Rahmen der eigenen Untersuchungen Versuche durchgeführt, um eine direkte Vergleichbarkeit von diskontinuierlicher und kontinuierlicher Prozessführung im Labormaßstab zu ermöglichen. Des Weiteren wurden die Produkte der Aminolyse zu Glufosinat-Ammonium umgewandelt, um anhand von in-situ Ausbeuten Unterschiede in der Ausbeute an Glufosinat-Ammonium besser erfassen zu können, als dies anhand der phosphorhaltiger α-Aminonitrile der Formeln (la) und (Ib) möglich wäre. Darüber hinaus wurden die Versuchsergebnisse mit einer einheitlichen Analytik ermittelt.

Sofern nicht anders angegeben beziehen sich alle Angaben auf das Gewicht.

Der Wassergehalt im eingesetzten NH₃ lag immer bei maximal 0,25 Gew.-%, und zumeist bei maximal 0,1 Gew.-%.

Verwendete Abkürzungen:
- ACM:: 3-[n-Butoxy(methyl)phosphoryl]-1-cyanopropylacetat, Verbindung der Formel (II)
- AMN:: n-Butyl (3-amino-3-cyanopropyl)-methylphosphinat, Verbindung der Formel (la)
- GFA:: Glufosinate-Ammonium
- GFA-is:: in-situ Ausbeute von Glufosinate-Ammonium
konti-Reaktor: Mittels kontinuierlicher Verfahrensführung betriebener Reaktor

### Beispiel A1: Vollkommen kontinuierliche Verfahrensführung

Die Reaktionsanlage setzte sich aus den folgenden, hintereinander angeordneten Reaktorabschnitten zusammen:
i.) Mikromischer, als Hauptmischer der Edukte ACM und flüssigem Ammoniak (Kaskadenmischer 2, Ehrfeld Mikrotechnik BTS GmbH);
ii.) MIPROWA-Reaktor, mit drei sich kreuzend angeordneten Kammschichten pro Kanal im Inneren (Stege in 700 µm, Stegabstände 1500 µm, Stegwinkel 45°), als Wärmetauscher und Nachmischer (MIPROWA LAB Reaktor A4, Ehrfeld Mikrotechnik BTS GmbH);
iii.) Strömungsrohr mit 1,58 mm Innendurchmesser und variabler Länge: 0 m (d.h. nicht verwendet), 10 m, 20 m oder 40 m (je nach Bedarf an Volumen, d.h. Nachreaktionszeit).

Die Mischzeit zum Erreichen eines Variationskoeffizienten von 0,05 oder geringer (CoV ≤ 5*10⁻²) betrug weniger als 4 Sekunden, und zumeist weniger als 1 Sekunde.

Alle Reaktorabschnitte außer i.) wurden temperiert betrieben. Für Details zur Temperierung von Reaktorabschnitten ii) und iii) wird auf die nachfolgende Tabelle 1 verwiesen. Der Mikromischer (Reaktorabschnitt i)) wurde bei Umgebungstemperatur (ca. 20°C) betrieben; das Volumen des Mikromischers betrug < 1/100 des gesamten Reaktorvolumens.

Vor jedem Versuch wurde die gesamte Reaktionsanlage mit ACM gespült und der gewünschte ACM-Fluss eingeregelt. Ammoniakgas wurde unter Druck verflüssigt und über eine HPLC-Dosierpumpe, deren Durchfluss mittels mini-Coriolis Massemesser geregelt wurde, stetig in Richtung der Reaktionsanlage gepumpt. Die Ammoniakleitung zum Reaktor wurde vor Versuchsbeginn mit flüssigem NH₃ gespült, um Reste von Inertgas sowie Ammoniakgas per Bypass abzuleiten. Anschließend wurde in Bypass-Stellung ein konstanter Ammoniakdruck und -fluss aufgebaut.

Das technische ACM (der Gehalt an ACM betrug 90 Gew.-%) wurde aus einem Vorratsgefäß kontinuierlich in den Reaktor gefördert. Anschließend wurde der Ammoniakstrom von Bypass auf Reaktor geschaltet und dadurch die Aminolyse gestartet. Die Eduktströme wurden so gewählt, dass die entsprechenden Verweilzeiten im kontinuierlich betriebenen Reaktor erreicht wurden. Die Massenströme lagen typischerweise in der Spanne 3,2 - 10,9 g/min (bezogen auf das technische ACM) bzw. 0,5 - 1,8 g/min (bezogen auf flüssiges NH₃). Neben der Anpassung der Massen- bzw. Volumenströme sowie der Temperaturen wurden auch die Volumina des Reaktors variiert, um unterschiedliche Verweilzeit einzustellen. Das molare Verhältnis NH₃/ACM betrug dabei stets 2,77.

Tabelle 1 zeigt eine Übersicht der verschiedenen Verweilzeiten und Reaktionstemperaturen bei vollkommen kontinuierlicher Aminolyse.

Um ein Entgasen von noch nicht umgesetztem Ammoniak unter Reaktionsbedingungen zu vermeiden, wurde der Druck am Ende (dem Ausgang) des konti-Reaktors stets auf 21 bar eingestellt. Bei diesem Mindestdruck in der Anlage erreicht reiner Ammoniak seinen Siedepunkt bei 51 °C. Ein Ausgasen von nicht umgesetztem Ammoniak wurde am Reaktorausgang unter Reaktionsbedingungen nie beobachtet, auch nicht bei den höheren Temperaturen.

Das erhaltene Produktgemisch wurde nach Passieren der Reaktorabschnitte direkt gequencht. Dazu wurde der erhaltene Flüssigkeitsstrom in vorgelegte, gerührte Salzsäurelösung eingeleitet, ohne dass der Einleitschlauch in die Salzsäure tauchte. Die dabei freigesetzte Neutralisationswärme wurde durch Kühlung in einem Eisbad abgeführt, wobei die Temperatur 40°C nicht überschritt.

### Beispiel A2: Überwiegend kontinuierliche Verfahrensführung

Die Durchführung der Versuche mit überwiegend kontinuierlicher Verfahrensführung entsprach weitgehend jener des Beispiels A1. Abweichend von der in Beispiel A1 beschriebenen, vollkommen kontinuierlichen Verfahrensführung wurde in diesem Falle der aus dem konti-Reaktor austretende Produktstrom ungequencht in einer diskontinuierlich betriebenen Vorlage aufgefangen und reagierte dort weiter. Diese Verfahrensführung wurde als überwiegend kontinuierlich bezeichnet, da unter den verwendeten Reaktionsbedingungen der Großteil des ACM-Umsatzes im kontinuierlich betriebenen Teil des Reaktors stattfindet.

Die Reaktionsanlage setzte sich in dieser Variante aus den folgenden, hintereinander angeordneten Reaktorabschnitten zusammen:
i.) Mikromischer, als Hauptmischer der Edukte ACM und flüssigem Ammoniak (Kaskadenmischer 2, Ehrfeld Mikrotechnik BTS GmbH);
ii.) MIPROWA-Reaktor, mit drei sich kreuzend angeordneten Kammschichten pro Kanal im Inneren (Stege in 700 µm, Stegabstände 1500 µm, Stegwinkel 45°), als Wärmetauscher und Nachmischer (MIPROWA LAB Reaktor A4, Ehrfeld Mikrotechnik BTS GmbH);
iii.) Strömungsrohr mit 1,58 mm Innendurchmesser und variabler Länge: 0 m (d.h. nicht verwendet), 10 m, 20 m oder 40 m (je nach Bedarf an Volumen, d.h. Nachreaktionszeit);
iv.) Autoklav (Serie 5500, Parr) mit 300 mL Gesamtvolumen.

Die Mischzeit zum Erreichen eines Variationskoeffizienten von 0,05 oder geringer (CoV ≤ 5*10⁻²) betrug weniger als 4 Sekunden, und zumeist weniger als 1 Sekunde.

Alle Reaktorabschnitte außer i.) wurden temperiert betrieben. Für Details zur Temperierung von Reaktorabschnitten ii) und iii) wird auf die nachfolgende Tabelle 2 verwiesen. Der Mikromischer (Reaktorabschnitt i)) wurde bei Umgebungstemperatur (ca. 20°C) betrieben; das Volumen des Mikromischers betrug < 1/100 des gesamten Reaktorvolumens.

Abweichend von der Durchführung gemäß obigem Beispiel A1 wurde, nach erfolgter Gleichgewichtseinstellung im konti-Reaktor, das Produktgemisch aus dem kontinuierlichen Reaktor direkt in einen unter 21 bar (absolut) Argondruck stehenden und bereits vortemperierten Autoklaven (Batchreaktor) eingeleitet (die davor angefallenen Vorprodukte wurden verworfen) und darin gerührt. Während der Befüllung des Autoklavs stieg der Anlagendruck, da das System geschlossen betrieben wurde. Im Autoklaven wurden zwei Zeiten unterschieden: die Füllzeit für die Einleitung des Produktstromes (t_{2F}) sowie die Nachreaktionszeit (t_{2N}), in der das Gemisch weiter reagieren kann.

Tabelle 2 zeigt eine Übersicht der verschiedenen Verweilzeiten, Füllzeiten und Nachreaktionszeiten sowie der Reaktionstemperaturen bei überwiegend kontinuierlicher Verfahrensführung der Aminolyse.

Am Ende der gewählten Nachreaktionszeit wurde das (unter Druck stehende) Produktgemisch durch das Probenrohr des Autoklavs zügig in eine gerührte, eisbadgekühlte Vorlage mit Salzsäure unter Temperaturkontrolle (max. 40 °C) eingeleitet. Dies bewirkt eine sofortige Unterbrechung der Reaktion (Quenchen). Der Autoklav wurde nachträglich mit einer berechneten Menge an Salzsäure ausgespült und diese Mischung mit dem bereits gequenchten Produkt vereint.

### Vergleichsbeispiel V1: Diskontinuierliche, dosierkontrollierte Verfahrensführung

Die diskontinuierliche Aminolyse von ACM wurde in einem 300 ml-Autoklav durchgeführt (Serie 5500, Parr). Im Autoklav wurden 164,3 g (566 mmol oder 150 mL) technisches ACM (der Gehalt an ACM betrug 90 Gew.-%) vorgelegt, vorgeheizt und mit Argon beaufschlagt. Anschließend wurde flüssiger Ammoniak, bei ständigem Rühren (600 U/min) und unter Kühlung, unterhalb der Flüssigkeitsoberfläche eindosiert. So wurden 26,7 g NH₃ eingeleitet (1,57 mol) und damit ein Molverhältnis NH₃/ACM von 2,77 erhalten. Es wurde eine Dosierzeit von vier Stunden gewählt, u.a. um eine Vergleichbarkeit mit großtechnischen Ausgestaltungsvarianten zu gestatten. Auf die Ammoniakdosierzeit folgte eine Nachreaktionszeit zur Vervollständigung des Umsatzes, die entweder 10 min oder 60 min betrug.

Tabelle 3 zeigt eine Übersicht der jeweiligen Zeiten und Temperaturen.

Nach Ende der Nachreaktionszeit wurde das Produkt wie unter Beispiel A2 beschrieben in Salzsäure eingeleitet und entsprechend verfahren.

### Verseifung, Neutralisation, Gehaltsbestimmung und Reproduktion der Reaktionsprodukte aus den Beispielen A1, A2 und V1

Die Reaktion wurde nach Austritt aus dem Reaktor des Beispiels A1 bzw. nach Ende der Nachreaktionszeit des Beispiels A2 oder des Vergleichsbeispiels V1 durch Ablassen in vorgelegte Salzsäure sofort gestoppt. Die anschließende Aufarbeitung erfolgte per Verseifung, welche mit 4,6 Moläquivalenten HCl (pro mol ACM) durchgeführt wurde.

In einen zuvor gewogenen Dreihalskolben (500 oder 1000 mL) mit Magnetrührer wurde eine vorher gewogene Menge an 32%iger Salzsäure vorgelegt. Das Produkt der Aminolyse wurde entweder direkt aus der Versuchsanlage des Beispiels A1 (100 g) bzw. der gesamte Inhalt des Autoklavs der Beispiele A2 bzw. V1 (190 g Produkt) über dessen Probenrohr tropfend auf die Säure im Kolben geleitet. Der Kolbeninhalt wurde im Eiswasserbad gekühlt und per Magnetrührer durchmischt (700 U/min). Die Zugabe erfolgte zügig, die Temperatur wurde dabei auf < 40°C gehalten. Es wurde eine orangegelbe Lösung erhalten. Nach dem Eintropfen bzw. dem quantitativen Überführen wurde das Gesamtgewicht der Lösung bestimmt. Der Ansatz wurde über Nacht im Kühlschrank aufbewahrt.

Am folgenden Tag wurde der Dreihalskolben mit einem Rückflusskühler und Tropftrichter mit Druckausgleich ausgestattet (Tropftrichter zwischen Kolben und Kühler). Die gesamte Apparatur wurde mit Argon gespült, gerührt (600 U/min) und dann 7 h im Rückfluss gekocht. Während des Erhitzens kondensierte im aufgesetzten Tropftrichter ein Destillat mit organischer Oberphase und wässriger Unterphase aus, wobei immer wieder ein Teil der Unterphase zurück in den Kolben abgelassen wurde. In der Oberphase reichern sich organische Koppel-, Folge- und Nebenprodukte an. Nach der 7-stündigen Verseifung wurden ca. 200 mL an Destillat abgenommen, bestehend aus Ober- und Unterphase. Die Oberphase wurde verworfen. Der Ansatz im Kolben wurde unter Rühren auf Raumtemperatur abgekühlt und über Nacht stehengelassen.

Über Nacht fiel festes Substrat aus. Der Kristallkuchen wurde zunächst mit einem Glasstab aufgerührt und anschließend mit dem Magnetrührer gut durchgerührt. Der Ansatz wurde unter Eiswasserkühlung und Rühren mit 25%iger wässriger Ammoniaklösung tropfenweise auf pH 6,5 neutralisiert. Der pH-Wert wurde über eine pH-Elektrode bestimmt. Anschließend wurde so viel Wasser zugesetzt, bis alle Feststoffe aufgelöst waren und bei Raumtemperatur eine klare, orangefarbene Lösung vorlag. Das Gewicht der Gesamtlösung wurde bestimmt (ca. 700 g). Davon wurden genau abgewogenen Proben entnommen, zwecks Gehaltsbestimmung von GFA in situ per HPLC.

Sämtliche Versuche wurden mehrfach durchgeführt, daher stellen die angegebenen Ausbeuten an GFA Mittelwerte der Ausbeuten von GFA in situ dar, sowohl aus Mehrfachversuchen als auch aus mehrfach durchgeführten Analysen.

Die Ausbeuten von GFA in situ (als GFA-is bezeichnet) sind nachfolgend in den Tabellen 1-3 dargestellt. Darüber hinaus geben die Tabellen 1 bis 3 eine Übersicht der verschiedenen Verweilzeiten, Füllzeiten und Nachreaktionszeiten sowie der Reaktionstemperaturen bei kontinuierlicher, überwiegend kontinuierlicher bzw. diskontinuierlicher Verfahrensführung der Aminolyse.

Erläuterung der in den Tabellen verwendeten Abkürzungen:

| | |
|---|---|
| T_{1M} | Temperatur im MIPROWA-Reaktor |
| τ_{1M} | mittlere hydrodynamische Verweilzeit im MIPROWA-Reaktor |
| T_{1S} | Temperatur im Strömungsrohr |
| τ_{1S} | mittlere hydrodynamische Verweilzeit im Strömungsrohr |
| τ_{1_total} | mittlere hydrodynamische Verweilzeit im gesamten konti-Reaktor (Mikromischer-Beitrag vernachlässigbar) |
| T₂ | Temperatur im Autoklaven |
| 0,5 * t_{2F} | Hälfte der Füllzeit des Autoklaven |
| t_{2N} | Nachreaktionszeit im Autoklaven im Anschluss an Befüllung |
| GFA-is | in-situ Ausbeute von Glufosinate-Ammonium (GFA) |

**Tabelle 1: Reaktionsbedingungen und Ergebnisse aus Beispiel A1**

| Versuch Nr. | MIPROWA-Reaktor | | Strömungsrohr | | | GFA-is |
|---|---|---|---|---|---|---|
| | T_{1M} | τ_{1M} | T_{1S} | τ_{1S} | τ_{1_total} | |
| | [°C] | [min] | [°C] | [min] | [min] | [%] |
| A1.1 | 30 | 19,6 | 40 | 39,4 | 59,0 | 97-98 |
| A1.2 | 30 | 19,6 | 50 | 39,4 | 59,0 | 97-99 |
| A1.3 | 50 | 5,0 | 50 | 5,0 | 10,0 | 94-95 |
| A1.4 | 50 | 6,6 | 50 | 13,4 | 20,0 | 96-97 |
| A1.5 | 60 | 5,0 | 60 | 5,0 | 10,0 | 97-98 |
| A1.6 | 60 | 6,6 | 60 | 13,4 | 20,0 | 95-96 |

**Tabelle 2: Reaktionsbedingungen und Ergebnisse aus Beispiel A2**

| Versuch Nr. | MIPROWA-Reaktor | | Strömungsrohr | | | Autoklav | | | • | R | GFA-is |
|---|---|---|---|---|---|---|---|---|---|---|---|
| | T_{1M} | τ_{1M} | T_{1S} | τ_{1S} | τ_{1_total} | T₂ | 0,5 * t_{2F} | t_{2N} | | | |
| | [°C] | [min] | [°C] | [min] | [min] | [°C] | [min] | [min] | [min] | | [%] |
| A2.1 | 30 | 5,0 | - | - | 5,0 | 50 | 6,6 | 10 | 21,6 | 0,30 | 94-95 |
| A2.2 | 30 | 6,6 | 30 | 13,4 | 20,0 | 50 | 8,9 | 10 | 38,9 | 1,06 | 95-96 |
| A2.3 | 40 | 3,4 | 40 | 1,6 | 5,0 | 50 | 4,5 | 10 | 19,5 | 0,34 | 96-97 |
| A2.4 | 40 | 5,0 | 40 | 5,0 | 10,0 | 50 | 6,7 | 10 | 26,7 | 0,60 | 96-97 |
| A2.5 | 50 | 5,0 | 50 | 5,0 | 10,0 | 50 | 6,7 | 10 | 26,7 | 0,60 | 97-98 |

| | | | | | | | | | | | |
|---|---|---|---|---|---|---|---|---|---|---|---|
| Summe • = τ_{1_total} + 0,5*t_{2F} + t_{2N} Verhältnis R = τ_{1_total} / (0,5*t_{2F} + t₂N) | | | | | | | | | | | |

**Tabelle 3: Reaktionsbedingungen und Ergebnisse aus Vergleichsbeispiel V1**

| Versuch Nr. | T | NH₃-Dosierzeit | Nachreaktionszeit | GFA-is |
|---|---|---|---|---|
| | [°C] | [min] | [min] | [%] |
| V1 | 30 | 240 | 60 | 93-94 |
| V2 | 35 | 240 | 10 | 91-92 |
| V3 | 35 | 240 | 60 | 94-95 |
| V4 | 40 | 240 | 10 | 92-93 |
| V5 | 40 | 240 | 60 | 93-94 |

## Patentansprüche

1. Verfahren zur Herstellung einer Mischung enthaltend mindestens eine Verbindung der Formel (la) und mindestens eine Verbindung der Formel (Ib) 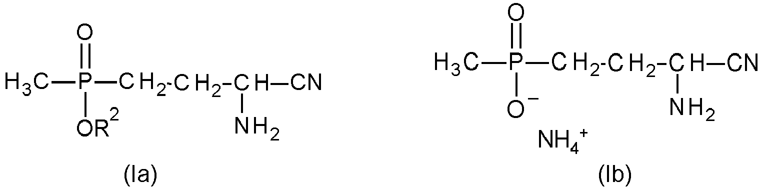
**dadurch gekennzeichnet, dass** eine oder mehrere Verbindungen der Formel (II) 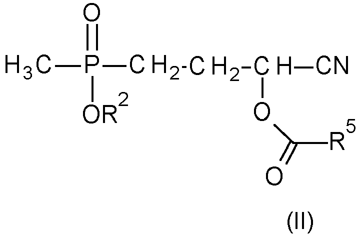
wobei jeweils gilt:
R² bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
R⁵ bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
in einem kontinuierlich betriebenen Rohrreaktor, dessen Länge mehr als das 100fache der charakteristischen Länge beträgt, unter Mischen mit NH₃ in flüssiger oder überkritischer Form umgesetzt werden, wobei als charakteristische Länge bei runder Reaktor-Querschnittsfläche der Durchmesser, bei quadratischer Reaktor-Querschnittsfläche die Seitenlänge des Quadrats, bei einer rechteckigen Reaktor-Querschnittsfläche das geometrische Mittel aus Länge (a) und Breite (b) des rechteckigen Querschnitts bezeichnet wird; und wobei das Mischen der Verbindung(en) der Formel (II) und NH₃ unter den folgenden Parametern erfolgt:
die Mischzeit zum Erreichen eines Variationskoeffizienten von 0,10 oder geringer (CoV ≤ 10⁻¹) beträgt weniger als 30 Sekunden.

2. Verfahren nach Anspruch 1, **dadurch gekennzeichnet, dass**
R² (C₃-C₆)-Alkyl bedeutet,
R⁵ (C₁-C₄)-Alkyl, (C₆-C₈)-Aryl oder (C₅-C₈)-Cycloalkyl bedeutet.

3. Verfahren nach Anspruch 1 oder 2, **dadurch gekennzeichnet, dass**
R² (C₄-C₅)-Alkyl bedeutet,
R⁵ Methyl, Ethyl oder iso-Propyl bedeutet.

4. Verfahren nach einem der Ansprüche 1 bis 3, **dadurch gekennzeichnet, dass** das Mischen unter den folgenden Parametern erfolgt:
die Mischzeit zum Erreichen eines Variationskoeffizienten von 0,05 oder geringer (CoV ≤ 5*10⁻²) beträgt weniger als 15 Sekunden, bevorzugt weniger als 4 Sekunden, weiter bevorzugt weniger als 1 Sekunde.

5. Verfahren nach einem der Ansprüche 1 bis 4, **dadurch gekennzeichnet, dass** die Länge des kontinuierlich betriebenen Rohrreaktors mehr als das 300fache der charakteristischen Länge, bevorzugt mehr als das 1000fache der charakteristischen Länge, weiter bevorzugt mehr als das 3000fache der charakteristischen Länge und besonders bevorzugt mehr als das 10000fache der charakteristischen Länge beträgt.

6. Verfahren nach einem der Ansprüche 1 bis 5, **dadurch gekennzeichnet, dass** insgesamt 2,0 bis 3,6 molare Äquivalente an NH₃ eingesetzt werden, bevorzugt 2,2 bis 3,2 molare Äquivalente, und besonders bevorzugt 2,4 bis 2,8 molare Äquivalente, jeweils bezogen auf die eingesetzte Menge an Verbindungen der Formel (II).

7. Verfahren nach einem der Ansprüche 1 bis 6, **dadurch gekennzeichnet, dass** das eingesetzte NH₃ im Wesentlichen wasserfrei ist und der Wassergehalt im eingesetzten NH₃ bei maximal 0,5 Gew.-% liegt.

8. Verfahren nach einem der Ansprüche 1 bis 7, **dadurch gekennzeichnet, dass** eine oder mehrere Verbindungen der Formel (II) wie in einem der Ansprüche 1 bis 3 definiert und NH₃ jeweils in flüssiger Form in dem Reaktor vermischt werden.

9. Verfahren nach einem der Ansprüche 1 bis 8, **dadurch gekennzeichnet, dass** die Umsetzung bei einer Temperatur im Bereich von 10 bis 80 °C erfolgt, bevorzugt bei einer Temperatur im Bereich von 15 bis 75 °C.

10. Verfahren nach einem der Ansprüche 1 bis 8, **dadurch gekennzeichnet, dass** die Umsetzung bei einer Temperatur im Bereich von 20 bis 70 °C erfolgt, bevorzugt bei einer Temperatur im Bereich von 25 bis 65 °C.

11. Verfahren nach einem der Ansprüche 1 bis 10, **dadurch gekennzeichnet, dass** die Umsetzung bei einem absoluten Druck von maximal 120 bar erfolgt, bevorzugt bei einem absoluten Druck von maximal 80 bar, weiter bevorzugt bei einem absoluten Druck von maximal 40 bar.

12. Verfahren zur Herstellung von Glufosinat 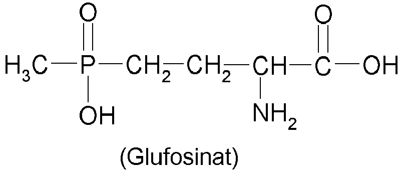
oder Glufosinat-Salzen, **dadurch gekennzeichnet, dass** in diesem Verfahren eine Mischung enthaltend mindestens eine Verbindung der Formel (la) und mindestens eine Verbindung der Formel (Ib) eingesetzt wird 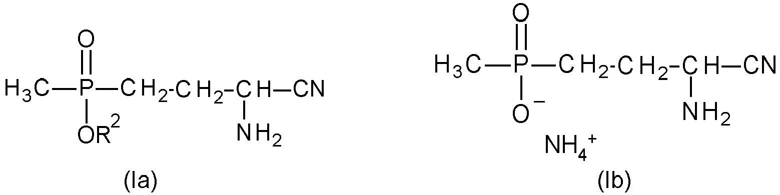
wobei R² die in einem der Ansprüche 1 bis 3 genannte Bedeutung hat, und
die Herstellung dieser eingesetzten Mischung gemäß einem in den Ansprüchen 1 bis 11 definierten Verfahren erfolgt.

13. Verfahren zur Herstellung von Glufosinat bzw. von Glufosinat-Salzen, insbesondere von Glufosinat, Glufosinat-Natrium, Glufosinat-Hydrochlorid oder Glufosinat-Ammonium, umfassend die folgenden Schritte (a) und (b):
(a) Herstellung einer gemäß einem in den Ansprüchen 1 bis 11 definierten Verfahren hergestellte Mischung enthaltend mindestens eine Verbindung der Formel (la) und mindestens eine Verbindung der Formel (Ib), wie in einem der Ansprüche 1 bis 3 definiert,
und
(b) Umsetzung der in Schritt (a) hergestellten Mischung enthaltend mindestens eine Verbindung der Formel (la) und mindestens eine Verbindung der Formel (Ib) zu Glufosinat bzw. zu Glufosinat-Salzen, insbesondere zu Glufosinat, Glufosinat-Natrium, Glufosinat-Hydrochlorid oder Glufosinat-Ammonium,
oder
(b) Verwendung der in Schritt (a) hergestellten Mischung enthaltend mindestens eine Verbindung der Formel (la) und mindestens eine Verbindung der Formel (Ib) zur Herstellung von Glufosinat bzw. von Glufosinat-Salzen, insbesondere von Glufosinat, Glufosinat-Natrium, Glufosinat-Hydrochlorid oder Glufosinat-Ammonium.

14. Verfahren nach Anspruch 13, **dadurch gekennzeichnet, dass** in Schritt (b) eine saure Verseifung der Nitrilgruppe und der Phosphinsäureestergruppe in Verbindungen der Formel (la) und eine saure Verseifung der Nitrilgruppe in Verbindungen der Formel (Ib) erfolgt, wobei diese Verseifungen vorzugsweise mit einer Mineralsäure erfolgen, dabei wiederum bevorzugt mit wässriger HCl (Salzsäure).

## Claims

1. A process for preparing a mixture comprising at least one compound of the formula (Ia) and at least one compound of the formula (Ib) 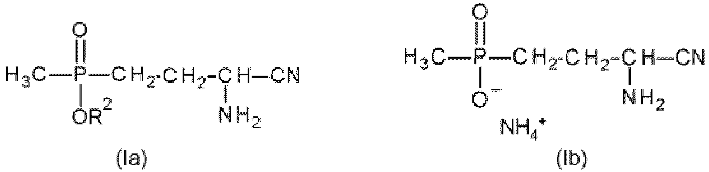
wherein one or more compounds of the formula (II) 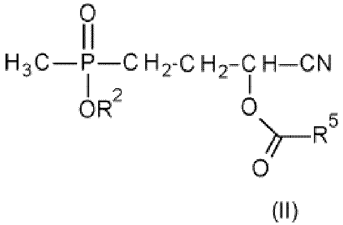
where in each case:
R² is (C₁-C₁₂)-alkyl, (C₁-C₁₂)-haloalkyl, (C₆-C₁₀)- aryl, (C₆-C₁₀)-haloaryl, (C₇-C₁₀)-aralkyl, (C₇-C₁₀)- haloaralkyl, (C₄-C₁₀)-cycloalkyl or (C₄-C₁₀)- halocycloalkyl,
R⁵ is (C₁-C₁₂)-alkyl, (C₁-C₁₂)-haloalkyl, (C₆-C₁₀)-aryl, (C₆-C₁₀)-haloaryl, (C₇-C₁₀)-aralkyl, (C₇-C₁₀)-haloaralkyl, (C₄-C₁₀)-cycloalkyl or (C₄-C₁₀)-halocycloalkyl,
are converted in a continuously operated tubular reactor having a length of more than 100 times the characteristic length, while mixing with NH₃ in liquid or supercritical form, where the characteristic length refers to the diameter in the case of a round cross-sectional reactor area, the side length of the square in the case of a square cross-sectional reactor area, and the geometric average of length (a) and width (b) of the rectangular cross section in the case of a rectangular cross-sectional reactor area; and where the mixing of the compound(s) of the formula (II) and NH₃ is effected under the following parameters:
the mixing time for attainment of a coefficient of variation of 0.10 or less (CoV ≤ 10⁻¹) is less than 30 seconds.

2. The process according to claim 1, wherein
R² is (C₃-C₆)-alkyl,
R⁵ is (C₁-C₄)-alkyl, (C₆-C₈)-aryl or (C₅-C₈)-cycloalkyl.

3. The process according to claim 1 or 2, wherein
R² is (C₄-C₅)-alkyl,
R⁵ is methyl, ethyl or isopropyl.

4. The process according to any of claims 1 to 3, wherein the mixing is effected under the following parameters:
the mixing time for attainment of a coefficient of variation of 0.05 or less (CoV ≤ 5*10⁻²) is less than 15 seconds, preferably less than 4 seconds, further preferably less than 1 second.

5. The process according to any of claims 1 to 4, wherein the continuously operated tubular reactor has a length of more than 300 times the characteristic length, preferably more than 1000 times the characteristic length, further preferably more than 3000 times the characteristic length and especially preferably more than 10 000 times the characteristic length.

6. The process according to any of claims 1 to 5, wherein a total amount of 2.0 to 3.6 molar equivalents of NH₃ is used, preferably 2.2 to 3.2 molar equivalents, and more preferably 2.4 to 2.8 molar equivalents, each based on the amount of compounds of the formula (II) used.

7. The process according to any of claims 1 to 6, wherein the NH₃ used is essentially anhydrous and the water content in the NH₃ used is not more than 0.5% by weight.

8. The process according to any of claims 1 to 7, wherein one or more compounds of the formula (II) as defined in any of claims 1 to 3 and NH₃ each in liquid form are mixed in the reactor.

9. The process according to any of claims 1 to 8, wherein the reaction is effected at a temperature in the range from 10 to 80°C, preferably at a temperature in the range from 15 to 75°C.

10. The process according to any of claims 1 to 8, wherein the reaction is effected at a temperature in the range from 20 to 70°C, preferably at a temperature in the range from 25 to 65°C.

11. The process according to any of claims 1 to 10, wherein the reaction is effected at an absolute pressure of not more than 120 bar, preferably at an absolute pressure of not more than 80 bar, further preferably at an absolute pressure of not more than 40 bar.

12. A process for preparing glufosinate 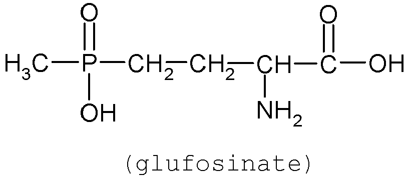
or glufosinate salts, wherein, in this process, a mixture comprising at least one compound of the formula (Ia) and at least one compound of the formula (Ib) is used 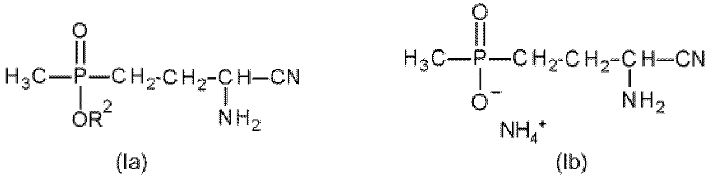
where R² has the definition given in any of claims 1 to 3, and
this mixture used is prepared by a process defined in claims 1 to 11.

13. A process for preparing glufosinate or glufosinate salts, especially glufosinate, glufosinate-sodium, glufosinate hydrochloride or glufosinate-ammonium, comprising the following steps (a) and (b):
(a) preparing a mixture prepared by a process defined in claims 1 to 11 and comprising at least one compound of the formula (Ia) and at least one compound of the formula (Ib) as defined in any of claims 1 to 3,
and
(b) converting the mixture prepared in step (a) and comprising at least one compound of the formula (Ia) and at least one compound of the formula (Ib) to glufosinate or to glufosinate salts, especially to glufosinate, glufosinate-sodium, glufosinate hydrochloride or glufosinate-ammonium,
or
(b) using the mixture prepared in step (a) and comprising at least one compound of the formula (Ia) and at least one compound of the formula (Ib) for preparation of glufosinate or of glufosinate salts, especially of glufosinate, glufosinate-sodium, glufosinate hydrochloride or glufosinate-ammonium.

14. The process according to claim 13, wherein, in step (b), an acidic hydrolysis of the nitrile group and the phosphinic ester group to give compounds of the formula (Ia) and an acidic hydrolysis of the nitrile group to give compounds of the formula (Ib) are effected, these hydrolyses preferably being effected with a mineral acid, and in turn preferably with aqueous HCl (hydrochloric acid).

## Revendications

1. Procédé pour la préparation d'un mélange contenant au moins un composé de formule (la) et au moins un composé de formule (Ib) 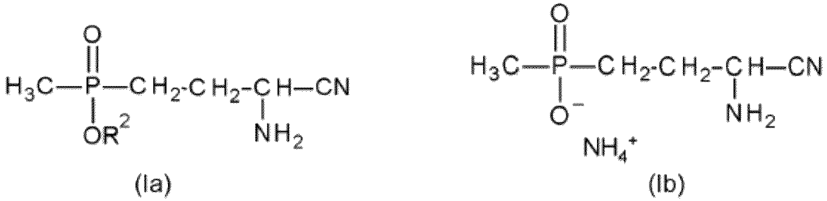
**caractérisé en ce qu'**un ou plusieurs composés de formule (II) 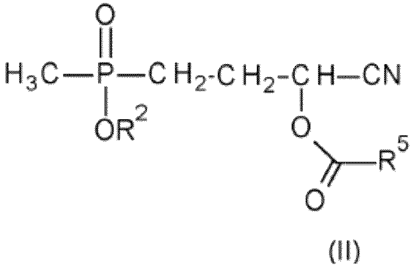
dans lesquelles à chaque fois :
R² signifie alkyle en (C₁-C₁₂), halogénoalkyle en (C₁-C₁₂), aryle en (C₆-C₁₀), halogénoaryle en (C₆-C₁₀), aralkyle en (C₇-C₁₀), halogénoaralkyle en (C₇-C₁₀), cycloalkyle en (C₄-C₁₀) ou halocycloalkyle en (C₄-C₁₀),
R⁵ signifie alkyle en (C₁-C₁₂), halogénoalkyle en (C₁-C₁₂), aryle en (C₆-C₁₀), halogénoaryle en (C₆-C₁₀), aralkyle en (C₇-C₁₀), halogénoaralkyle en (C₇-C₁₀), cycloalkyle en (C₄-C₁₀) ou halocycloalkyle en (C₄-C₁₀),
sont mis à réagir dans un réacteur tubulaire exploité en continu, dont la longueur est de plus de 100 fois la longueur caractéristique, sous agitation, avec NH₃ sous forme liquide ou supercritique, la longueur caractéristique désignant le diamètre, pour une section transversale de réacteur arrondie, la longueur du côté du carré, pour une section transversale de réacteur carrée, la moyenne géométrique de la longueur (a) et de la largeur (b) de la section transversale rectangulaire, pour une section transversale de réacteur rectangulaire ; et le mélange du ou des composés de formule (II) et de NH₃ ayant lieu avec les paramètres suivants :
la durée de mélange pour atteindre un coefficient de variation de 0,10 ou plus petit (CoV ≤ 10⁻¹) est de moins de 30 secondes.

2. Procédé selon la revendication 1, **caractérisé en ce que**
R² signifie alkyle en (C₃-C₆),
R⁵ signifie alkyle en (C₁-C₄), aryle en (C₆-C₈) ou cycloalkyle en (C₅-C₈).

3. Procédé selon la revendication 1 ou 2, **caractérisé en ce que**
R² signifie alkyle en (C₄-C₅),
R⁵ signifie méthyle, éthyle ou iso-propyle.

4. Procédé selon l'une quelconque des revendications 1 à 3, **caractérisé en ce que** le mélange est réalisé avec les paramètres suivants :
la durée de mélange pour atteindre un coefficient de variation de 0,05 ou plus petit (CoV ≤ 5*10⁻²) est de moins de 15 secondes, préférablement de moins de 4 secondes, plus préférablement de moins de 1 seconde.

5. Procédé selon l'une quelconque des revendications 1 à 4, **caractérisé en ce que** la longueur du réacteur tubulaire exploité de manière continue est de plus de 300 fois la longueur caractéristique, préférablement de plus de 1 000 fois la longueur caractéristique, plus préférablement de plus de 3 000 fois la longueur caractéristique et particulièrement préférablement de plus de 10 000 fois la longueur caractéristique.

6. Procédé selon l'une quelconque des revendications 1 à 5, **caractérisé en ce qu'**au total 2,0 à 3,6 équivalents molaires de NH₃ sont utilisés, préférablement 2,2 à 3,2 équivalents molaires, et particulièrement préférablement 2,4 à 2,8 équivalents molaires, à chaque fois par rapport à la quantité utilisée de composés de formule (II).

7. Procédé selon l'une quelconque des revendications 1 à 6, **caractérisé en ce que** le NH₃ utilisé est essentiellement anhydre et la teneur en eau dans le NH₃ utilisé se situe au maximum à 0,5 % en poids.

8. Procédé selon l'une quelconque des revendications 1 à 7, **caractérisé en ce qu'**un ou plusieurs composés de formule (II) comme définis dans l'une quelconque des revendications 1 à 3 et NH₃ sont mélangés à chaque fois sous forme liquide dans le réacteur.

9. Procédé selon l'une quelconque des revendications 1 à 8, **caractérisé en ce que** la transformation est réalisée à une température dans la plage de 10 à 80 °C, préférablement à une température dans la plage de 15 à 75 °C.

10. Procédé selon l'une quelconque des revendications 1 à 8, **caractérisé en ce que** la transformation est réalisée à une température dans la plage de 20 à 70 °C, préférablement à une température dans la plage de 25 à 65 °C.

11. Procédé selon l'une quelconque des revendications 1 à 10, **caractérisé en ce que** la transformation est réalisée à une pression absolue maximale de 120 bars, préférablement à une pression absolue maximale de 80 bars, plus préférablement à une pression absolue maximale de 40 bars.

12. Procédé pour la préparation de glufosinate 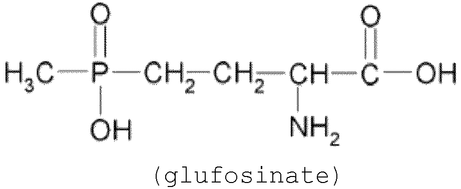
ou de sels de glufosinate, **caractérisé en ce que** dans ce procédé un mélange contenant au moins un composé de formule (la) et au moins un composé de formule (Ib) est utilisé 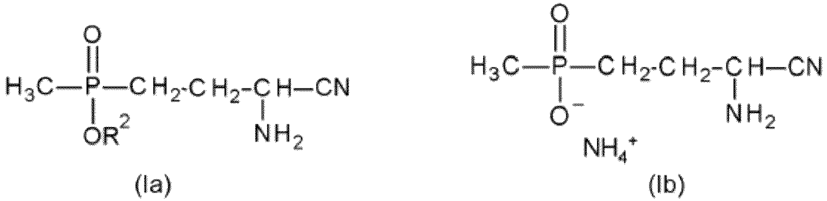
R² possédant la signification mentionnée dans l'une quelconque des revendication 1 à 3, et
la préparation de ce mélange utilisé est réalisée selon un procédé défini dans les revendications 1 à 11.

13. Procédé pour la préparation de glufosinate ou de sels de glufosinate, en particulier de glufosinate, de glufosinate-sodium, de glufosinate-chlorhydrate ou de glufosinate-ammonium, comprenant les étapes suivantes (a) et (b) :
(a) préparation d'un mélange préparé selon un procédé défini dans les revendications 1 à 11 contenant au moins un composé de formule (la) et au moins un composé de formule (Ib), comme définis dans l'une quelconque des revendications 1 à 3, et
(b) transformation du mélange préparé dans l'étape (a) contenant au moins un composé de formule (la) et au moins un composé de formule (Ib) en glufosinate ou en sels de glufosinate, en particulier en glufosinate, en glufosinate-sodium, en glufosinate-chlorhydrate ou en glufosinate-ammonium, ou
(b) utilisation du mélange préparé dans l'étape (a) contenant au moins un composé de formule (la) et au moins un composé de formule (Ib) pour la préparation de glufosinate ou de sels de glufosinate, en particulier de glufosinate, de glufosinate-sodium, de glufosinate-chlorhydrate ou de glufosinate-ammonium.

14. Procédé selon la revendication 13, **caractérisé en ce que** dans l'étape (b) une saponification acide du groupe nitrile et du groupe ester d'acide phosphinique dans des composés de formule (la) et une saponification acide du groupe nitrile dans des composés de formule (Ib) sont réalisées, ces saponifications étant de préférence réalisées avec un acide minéral, à cet égard à son tour préférablement avec du HCl aqueux (acide chlorhydrique).
